# EUROPÄISCHE PATENTSCHRIFT

(11) **EP 2 039 960 B1**
(45) Veröffentlichungstag und Bekanntmachung des Hinweises auf die Patenterteilung: **30.07.2014**
(21) Anmeldenummer: 08016359.5
(22) Anmeldetag: 17.09.2008
(51) Int. Cl.: B23Q 11/08

(54) **Führungseinrichtung für eine Schutzabdeckung**
Guide device for a protective covering
Dispositif de guidage pour un capot de protection

(30) Priorität: 17.09.2007 DE 102007045174
(43) Veröffentlichungstag der Anmeldung: 25.03.2009
(73) Patentinhaber: Arno Arnold GmbH, 63179 Obertshausen (DE)
(72) Erfinder: Mang, Wolf Matthias, 63179 Obertshausen (DE)
(74) Vertreter: Böck, Bernhard

(56) Entgegenhaltungen:
- DE-A1-102004 011 492
- DE-B3-102006 043 938
- DE-U1-202004 009 216
- DE-U1-202005 010 384
- JP-A- 9 125 845
- JP-A- 2004 108 473
- US-A- 5 156 574
- US-A- 5 624 363

## Beschreibung

Die Erfindung betrifft eine Führungseinrichtung nach dem Oberbegriff der Ansprüche 1 und 26 und eine damit ausgerüstete Schutzabdeckung.

Insbesondere bei Werkzeugmaschinen, bei denen ein horizontal laufender Schlitten vorgesehen ist, muss aus Gründen der Arbeitssicherheit der Bereich auf vorzugsweise beiden Seiten des Schlittens durch eine Schutzabdeckung abgedeckt werden, um ein unbeabsichtigtes Eingreifen des Benutzers in diesen Bereich, in dem bewegliche Teile wie Wellen, Antriebe oder dergleichen angeordnet sind, zu verhindern und dadurch eine ausreichende Arbeitssicherheit zu gewährleisten. Dabei ist der für die Führung der Schutzabdeckung zur Verfügung stehende Raum regelmäßig begrenzt.

Insbesondere wenn der Schlitten zwar in horizontaler Richtung beweglich ist, die Schutzabdeckung jedoch in einer Ebene angeordnet ist, die im wesentlichen senkrecht verläuft, ist nach dem Stand der Technik eine zusätzliche Führung für die Elemente der Schutzabdeckung notwendig, die jedoch üblicherweise den Arbeitsraum einschränkt.

Die US 5, 624, 363 beschreibt eine Führungseinrichtung für eine Schutzabdeckung zur Abdeckung beweglicher Teile an Werkzeugmaschinen nach dem Oberbegriff der Ansprüche 1 und 26.

Aus der JP 9 125845 A ist ein Rolltor bekannt, das eine Mehrzahl von sich quer zur Längsachse des Rolltors erstreckenden Torelementen aufweist, die durch ein Koppelglied nach Art eines Scherengitters miteinander verbunden sind. Die Torelemente werden über eine zug- und schubkraftübertragende Gliederkette bewegt und damit das Tor geöffnet und geschlossen. Die Gliederkette wird dabei an einem Antriebsritzel umgelenkt.

In der DE 2004 011 492 A1 ist ein Segmenttor für eine Garage beschrieben. Dieses Segmenttor weist dabei eine Vielzahl von Torsegementen auf, die jeweils in einer Laufschiene geführt sind. Betätigt wird das Tor ebenfalls über eine zug- und schubkraftübertragende umgelenkte Kette.

Ausgehend von diesem Stand der Technik ist es die Aufgabe der vorliegenden Erfindung, eine Führungseinrichtung für eine Schutzabdeckung zu schaffen, die bei ausreichender Stabilität den Arbeitsraum möglichst wenig einschränkt.

Diese Aufgabe wird durch eine Führungscinrichtung nach der Lehre des Anspruchs 1 oder der Lehre des Anspruchs 26 gelöst.

Erfindungsgemäße Ausgestaltungen sind Gegenstand der Unteransprüche.

In Rede stehende Schutzabdeckungen, die insbesondere, jedoch keineswegs ausschließlich, zur Abdcckung beweglicher Teile an Werkzeugmaschinen und dergleichen dienen, weisen zunächst in für sich bekannter Weise eine Mehrzahl von sich quer zur Längsachse der Schutzabdeckung erstreckenden Schutzabdeckungselementen auf. Diese Schutzabdeckungselementc können beispielsweise durch Faltenbalgabschnitte, insbesondere mit Stützrahmen versehene Faltenbalgabschnitte, teleskopartig ineinander greifende im wesentlichen kastenartig geformte Schutzabdeckungselemente oder Schutzabdeckungselemente, die zumindest abschnittsweise einen im wesentlichen U- oder L-förmigen Querschnitt aufweisen und einander in Längsrichtung der Schutzabdeckung teleskopartig gegeneinander verschiebbar übergreifen, gebildet werden. Die Schutzabdeckungselemente sind dabei in bekannter Weise durch mindestens ein zumindest Zugkraft übertragendes Koppelglied miteinander verbunden, beispielsweise durch den Faltenbalgkörper, ein Zugband, eine Federanordnung oder dergleichen mehr, so dass beim Betätigen bzw. Verfahren der Schutzabdeckung zumindest das jeweils nächste Schutzabdeckungselement mitgenommen wird, wenn an einem Schutzabdeckungselemcnt mittelbar oder unmittelbar eine Zugkraft angreift.

Erfingdungsgemäß ist zur Abstützung der Schutzabdeckungselemente und damit zur Aufnahme der Gewichtskraft der Schutzabdeckung eine Führungseinrichtung vorgesehen, die mindestens ein sich im wesentlichen in Längsrichtung der Schutzabdeckung erstreckendes bewegliches lineares Stützelement aufweist, dessen erstes Ende mittelbar oder unmittelbar an einem beweglichen Schlitten der Werkzeugmaschine oder dergleichen befestigt ist und dessen zweites Ende beim Verfahren der Schutzabdeckung über eine Umlenkvorrichtung umgelenkt wird. Dabei kann die Umlenkung sowohl innerhalb des durch die Schutzabdeckung bestimmungsgemäß abgedeckten Bereichs als auch außerhalb erfolgen.

Dies bedeutet mit anderen Worten, dass erfindungsgemäß eine zusätzliche Führung oder Abstützung für die Schutzabdeckungselemente vorgesehen ist, die jedoch beim Betätigen bzw. Verfahren der Schutzabdeckung mitbewegt wird und so den Arbeitsraum nicht einschränkt.

In einfachster Weise kann das lineare Stützelement beispielsweise durch ein Seil, insbesondere ein Drahtseil, ein Band, insbesondere ein Stahlband, oder einen Riemen gebildet werden, das bzw. der derart vorgespannt ist, dass es bzw. er in der Lage ist, die Gewichtskraft der Schutzabdcckungselemente abstützend aufzunehmen.

Die Umlenkung des linearen Stützelementes kann in Richtung der abzustützenden Gewichtskraft, das heißt in vertikaler Richtung, oder aber horizontal, das heißt quer zur Gewichtskraft, erfolgen. Insbesondere bei einer Umlenkung in horizontaler Richtung kann beispielsweise ein Stahlband in Hochkantanordnung Verwendung finden, ohne dass es dann notwendigerweise einer Vorspannung bedarf. Ebenso kann bei horizontaler Umlenkung eine beliebige Kette Verwendung finden, die im Wesentlichen quer zu ihrer Längsersteckung eine ausreichende Festigkeit und insbesondere Bicgsteifigkeit aufwcist.

Nach einem bevorzugten Ausführungsbeispiel weist das Stützelement mindestens einen Riemen auf, an dem Formstücke derart angeordnet sind, dass die Formstücke in im wesentlichen gerader Anordnung des Riemens derart aneinander zur Anlage gelangen und/oder ineinander eingreifen, dass eine Durchbiegung des Stützelementes aufgrund der Gewichtskraft der abzustützenden Schutzabdeckungselemente verhindert wird. Dabei sind die Formstücke an einer Seite des Riemens angeordnet, so dass sie beim Umlenken des Riemens in Richtung der den Formstücken abgewandten Seite des Riemens außer Eingriff geraten und so die Umlenkung ermöglichen.

Gemäß einer besonders bevorzugten Ausgestaltung der Erfindung weist das Stützelement mindestens eine Kette auf, an der Formstücke derart angeordnet sind, dass die Formstücke in im wesentlichen gerader Anordnung des Riemens derart aneinander zur Anlage gelangen und/oder ineinander eingreifen, dass eine Durchbiegung des Stützelementes aufgrund der Gewichtskraft der abzustützenden Schutzabdeckungselemente verhindert wird. Auch hier erfolgt durch die Anordnung der Formstücke an lediglich einer Seite der Kette eine Selbsthemmung der Kette gegen Durchbiegung in einer Richtung, nämlich in Richtung der Gewichtskraft der Schutzabdeckungselemente, während ein Umlenken in die gleiche Richtung in einfacher Weise möglich ist.

Die Art der Kette ist grundsätzlich beliebig. Vorzugsweise jedoch ist die Kette als Gelenkkette, insbesondere als Bolzenkette, Buchsenkette oder Rollenkette ausgebildet.

Nach einer weiteren Ausführungsform gemäß der Erfindung sind die Formstücke im Wesentlichen U-förmig ausgebildet. Dabei sind die Formstücke so auf der Kette oder dem Riemen angeordnet, dass der Basisbereich dem Riemen oder der Kette mit Abstand gegenüberliegt und mindestens einer der beiden Flanschbereiche des U's am Riemen oder der Kette befestigt ist. Die von Riemen oder Kette wegweisende Fläche des Basisbereichs des U's ist dabei vorzugsweise als Auflagerfläche für die Schutzabdeckungselemente ausgebildet. Durch diese einfache Gestaltung ergibt sich insgesamt eine gute Abstützung der Schutzabdeckungselemente auf den Formstücken und damit auf dem Stützelement insgesamt.

Um eine gute gegenseitige Abstützung der Formstücke aneinander zu erreichen, sind vorzugsweise die jeweils zueinander weisenden Kantenbereiche des Basisbereichs und/oder der Flanschbereiche jeweils benachbarter Formstücke als Anschlagkanten ausgebildet, mit denen benachbarte Formstücke aneinander zu Anlage gelangen können.

Dabei können die Anschlagskanten des Basisbereichs jeweils eines Formstückes mindestens eine Ausnehmung aufweisen, in die ein dazu form- und funktionskomplementärer Vorsprung der Anschlagskanten des Basisbereichs der jeweils benachbarten Formstücke in Eingriff bringbar ist. In ähnlicher Weise können auch die Anschlagskanten der Flanschbereiche jeweils eines Formstückes mindestens eine Ausnehmung aufweisen, in die ein dazu form- und funktionskomplementärer Vorsprung der Anschlagskanten der Flanschbereiche der jeweils benachbarten Formstücke in Eingriff bringbar ist. Durch diese gleichsam verrastenden Eingriffe wird eine immer gleiche Relativposition der jeweiligen Formstücke unter Belastung sichergestellt.

Insbesondere wenn nach einem Ausführungsbeispiel die Vorsprünge und Ausnchmungen im Wesentlichen keilförmig ausgebildet sind, ergibt sich eine zentrierte Anordnung jeweils benachbarter Formstücke in Richtung der Längsachse des Stützelementes bzw. der Kette oder des Riemens.

Nach einem besonders bevorzugten Ausführungsbeispiel der Erfindung sind die Formstücke derart dimensioniert und/oder auf dem Stützelement bzw. der Kette oder dem Riemen angeordnet, dass der Riemen oder die Kette bei im Wesentlichen gerader Anordnung unter zumindest geringfügiger Vorspannung stehen. Dies bedeutet mit anderen Worten, dass durch diese Vorspannung beispielsweise die Gewichtskraft der Schutzabdeckungselemente, aber auch die Elastizität des Riemens oder Kette in Längsrichtung derart berücksichtigt werden kann, dass das Stützelement seine im Wesentlichen gerade Anordnung dann einnimmt, wenn die Schutzabdeckungselemente bestimmungsgemäß aufgelagert sind.

Die Anordnung der Formstücke an der Kette ist zunächst grundsätzlich beliebig und hängt neben der Gestaltung der Kette insbesondere von der Form der Formstücke ab. Nach einem bevorzugten Ausführungsbeispiel der Erfindung jedoch weist die Kette paarweise angeordnete Innen- und Außenlaschen auf, wobei die Flanschbereiche jeweils eines Formstückes an jeweils ein Paar Innen- oder Außenlaschen eines Kettengliedes angeformt oder an diesen befestigt sind. Die Befestigung kann dabei unlösbar, beispielsweise durch Löten, Schweißen oder Kleben, erfolgen oder lösbar, beispielsweise durch Schrauben, Nieten oder eine mechanische Verrastung.

Nach einem weiteren Ausführungsbeispiel weisen die Außen- oder Innenlaschen der Kettenglieder jeweils einen nach außen weisenden flanschartigen Absatz auf und die Flanschbereiche der Formstücke sind mit einer ebenfalls nach außen weisenden Abkantung versehen. Bei dieser Gestaltung gelangen die Formstücke mit ihren Abkantungen auf den flanschartigen Absätzen der Kettenglieder zur Anlage und können dort befestigt, beispielsweise verschraubt, werden.

Gemäß einer weiteren Gestaltung sind die Formstücke nicht U-förmig ausgebildet, sondern weisen eine im Wesentlichen blockartigc Gestalt auf, wobei die jeweils zueinander weisenden Flächen jeweils benachbarter Formstücke zumindest bereichsweise als Anschlagflächen ausgebildet sind. Dabei können die zueinander weisenden Flächen jeweils benachbarter Formstücke mit Ausnehmungen und/oder Vorsprüngen versehen sein, dergestalt, dass die Vorsprünge eines Formstückes in die Ausnehmungen mindestens eines benachbarten Formstückes in Eingriff bringbar sind. Dabei ergibt sich eine vergleichsweise einfache Form, die beispielsweise für ein Formstück aus Kunststoff durch Spritzgießen oder dergleichen kostengünstig realisierbar ist.

Nach einem weiteren Ausführungsbeispiel weisen die Formstücke im Bereich ihrer Seitenflächen jeweils mindestens eine Ausnehmung auf, in die an den Innen- oder Außenlaschen eines Kettengliedes angeformte Befestigungslaschen in Eingriff bringbar sind. Dies bedeutet mit anderen Worten, dass durch den Eingriff der Befestigungslaschen der Kettenglieder in die zugeordneten Ausnehmungen der Formstücke eine zuverlässige und insbesondere lagegcnaue Befestigung der Formstücke an der Kette erreicht werden kann.

Eine ganz besonders einfache und damit kostengünstige Befestigung der Formstücke ergibt sich, wenn nach einem weiteren Ausführungsbeispiel jede Ausnehmung mindestens ein Rastelement aufweist, das in eine dazu form- und/oder funktionskomplementäre Ausnehmung der Befestigungslasche des entsprechenden Kettengliedes in Eingriff bringbar ist. Dadurch ist eine Befestigung der Formstücke durch einfaches Aufstecken auf die Befestigungslaschen unter Bildung einer insbesondere elastischen und lösbaren Rastverbindung möglich.

Alternativ zur vorstehend beschriebenen Ausführungsform kann auch jede Befestigungslasche mindestens ein Rastelement aufweisen, das in eine dazu form- und/oder funktionskomplementäre Ausnehmung in der Ausnehmung des Formstücks in Eingriff bringbar ist.

Das Material der Formstücke ist beliebig und hängt im Wesentlichen von der bestimmungsgemäß aufzunehmenden Last ab. So können die Formstücke beispielsweise aus Metall, insbesondere Stahl oder einer Leichtmetalllegierung, sein oder aber aus Kunststoff. Die Herstellung kann dabei durch Umformen, beispielsweise Biegen, Abkanten oder ein sonstiges Bearbeitungsverfahren, erfolgen oder durch Urformen, insbesondere Gießen, im Fall von Kunststoff vorzugsweise durch ein Spritzgießverfahren.

Die Abstützung bzw. Auflage der Schutzabdeckungselemente erfolgt beispielsweise dadurch, dass die Schutzabdeckungselemente Auflagerbereiche aufweisen, die auf den Formstücken abstützend zur Anlage gelangen. Dabei können die Auflagerbereiche durch Profilkanten oder Profilflächen der Schutzabdeckungselemente gebildet werden, beispielsweise durch Profilkanten in Ausnehmungen, beispielsweise der Stützrahmen eines Faltenbalge, die vom Stützelement durchgriffen werden. Da beim Verfahren bzw. Betätigen der Schutzabdeckung regelmäßig eine Relativbcwegung zwischen den Schutzabdeckungselementen und den Formstücken des Stützelementes stattfindet, sind vorzugsweise die Auflagerbereiche der Formstücke und/oder die zugeordneten Auflagerbereiche der Schutzabdeckungselemente mit Gleitmitteln versehen. Dies können beispielsweise gleitfähige Beschichtungen sein, z.B. Teflon oder dergleichen, oder aber separate Gleitelemente, insbesondere aus Kunststoff, die beispielsweise auf die Profilkanten aufgesteckt sind.

Die Umlenkung des Stützelementes, insbesondere also der Kette oder des Riemens, beim Verfahren der Schutzabdeckung in einem Bereich, in dem keine Behinderung durch den umgelenkten Bereich erfolgt, kann grundsätzlich beliebig erfolgen. In einfachster Weise weist dazu die Umlenkeinrichtung eine Umlenkfläche auf, die beispielsweise durch eine im Wesentlichen viertelkreisförmige Zylinderabschnittsflächen gebildet wird. Weiter ist insbesondere im Fall eines riemenartigen Stützelementes eine Umlenkrolle oder im Fall einer Kette ein Umlenkzahnrad möglich.

Die Umlenkrolle oder das Umlenkzahnrad können im einfachsten Fall lediglich drehbar gelagert sein und beim Verfahren der Schutzabdeckung durch diese passiv bewegt bzw. gedreht werden. Nach einem weiteren Ausführungsbeispiel der Erfindung sind die Umlenkrolle oder das Umlenkzahnrad antreibbar ausgebildet. Dies kann im einfachsten Fall durch einen elektromotorischen Antrieb erfolgen, der zudem mit der Bewegung beispielsweise des Schlittens der Werkzeugmaschine bzw. der damit gekoppelten Schutzabdeckung synchronisiert sein kann.

Um insbesondere ein zuverlässiges Umlenken der Kette bzw. des Riemens an der Umlenkeinrichtung zu gewährleisten, kann im Bereich nach der Umlenkeinrichtung eine Einrichtung zur Aufbringung einer Zugkraft auf das Stützelement angeordnet sein. Dies kann beispielsweise wiederum ein wickelartiger Antrieb sein, der das freie Ende des Stützelementes erfasst und auf eine Spindel oder dergleichen aufwickelt. Im einfachsten Fall kann diese Einrichtung durch ein Gewicht gebildet werden, das am freien Ende der Kette oder des Riemens befestigt ist.

Um insbesondere bei einer starken Beschleunigung des Stützelementes bei einem schnellen Verfahren der Schutzabdeckung zu verhindern, dass das Stützelement von der Umlenkeinrichtung abgehoben wird, kann nach einem weiteren Ausführungsbeispiel im Bereich der Umlenkeinrichtung eine Einrichtung zur Aufbringung einer zumindest geringfügigen Anpresskraft auf das Stützelement gegen die Umlenkeinrichtung vorgesehen sein. Dabei kann diese Einrichtung beispielsweise eine vorzugsweise federbclastete Andrückrolle aufweisen, mit der das Stützelement, beispielsweise eine Kette, gegen die Umlenkeinrichtung, beispielsweise eine Umlenkrolle, gedrückt wird.

Alternativ zu den vorstehend beschrieben Ausführungsformen kann die Führungseinrichtung der Erfindung zwar ein sich im wesentlichen in Längsrichtung der Schutzabdeckung erstreckendes bewegliches lineares Stützelement zur Abstützung der Schutzabdeckungselemente aufweisen, dessen erstes Ende mittelbar oder unmittelbar an einem beweglichen Schlitten oder dergleichen befestigt ist und mit diesem bewegt wird. Jedoch ist das lineare Stützelement bei dieser Gestaltung teleskopartig, beispielsweise nach Art eines Schubladenauszuges oder einer WMB Spirale, ausgebildet, dessen zweites Ende im wesentlichen ortsfest am Rahmen einer Werkzeugmaschine oder dergleichen befestigt ist.

Im Folgenden wird die Erfindung anhand lediglich Ausführungsbeispiele zeigender Figuren näher erläutert. Es zeigt:
- **Fig. 1**: in schematischer perspektivischer Darstellung ein erstes Ausführungsbeispiel eines Formstücks gemäß der Erfindung;
- **Fig. 2**: in einer der Fig. 1 entsprechenden Darstellung ein zweites Ausführungsbeispiel eines erfindungsgemäßen Formstücks;
- **Fig. 3**: in einer der Fig. 1 entsprechenden Darstellung ein drittes Ausführungsbeispiel eines erfindungsgemäßen Formstücks;
- **Fig. 4**: in schematischer perspektivischer Darstellung einen Abschnitt eines erfindungsgemäßen Stützelementes mit Formstücken nach Fig. 1;
- **Fig. 5**: in einer der Fig. 4 entsprechenden Darstellung einen Abschnitt eines erfindungsgemäßen Stützelementes mit Formstücken nach Fig. 2;
- **Fig. 6**: in einer der Fig. 4 entsprechenden Darstellung einen Abschnitt eines erfindungsgemäßen Stützelementes mit Formstücken nach Fig. 3;
- **Fig. 7**: in schematischer perspektivischer Darstellung ein Ausführungsbeispiel einer Kette zur Aufnahme von Formstücken gemäß der Erfindung;
- **Fig. 8**: in schematischer perspektivischer Darstellung ein weiteres Ausführungsbeispiel eines Formstücks zur Anordnung an der Kette nach Fig. 7;
- **Fig. 9**: in schematischer perspektivischer Darstellung einen Abschnitt eines Ausführungsbeispiels eines Stützelementes unter Verwendung des Formstücks nach Fig. 8 und der Kette nach Fig. 7; und

- **Fig. 10**: in schematischer perspektivischer Darstellung zwei Schutzabdeckungen gemäß der Erfindung, die jeweils an eine Seite eines Schlittens einer nicht dargestellten Werkzeugmaschine angeordnet sind.

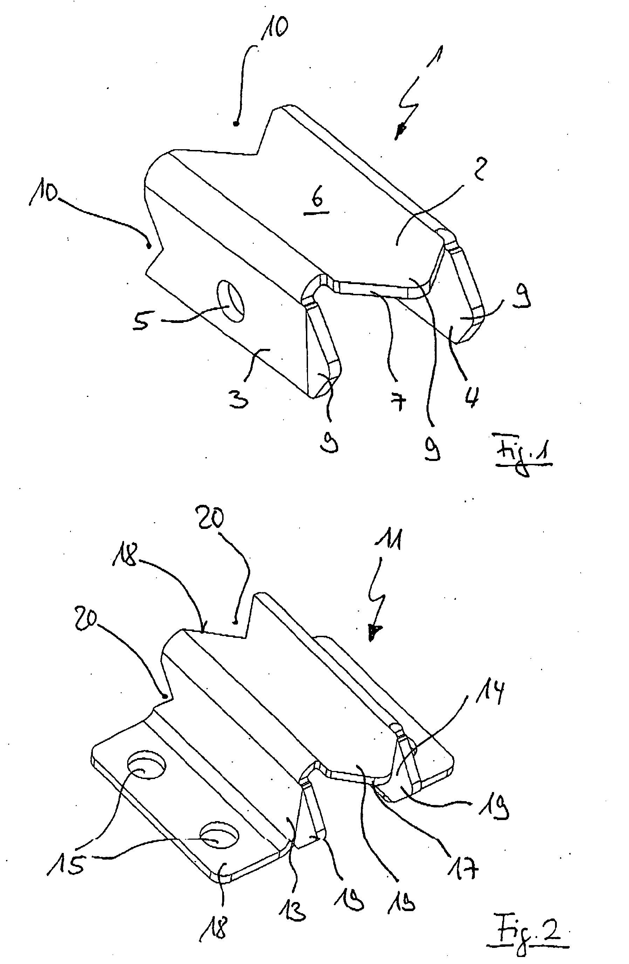

Das in Fig. 1 dargestellte Formstück 1 weist im Querschnitt eine im Wesentlichen U-förmige Gestalt mit einem Basisbereich 2 und zwei daran angeformten Flanschbereichen 3 und 4 auf. Die Flanschbereiche 3 und 4 sind jeweils mit einer durchgehenden Ausnehmung 5 versehen, die zum Durchgriff eines Befestigungsmittels, beispielsweise einer Schraube oder eines Niets, zur Befestigung des Formstücks 1 an einem nicht dargestellten Riemen oder einer Kette, beispielsweise den Außenlaschen eines Kettengliedes dient. Die Fläche 6 des Basisbereichs 2 ist als Auflagerfläche 6 für die bestimmungsgemäß abzustützenden Schutzabdeckungselemente ausgebildet und kann beispielsweise mit einer reibungsoder verschleißmindernden Beschichtung versehen sein. Die Stirnkanten 7 und 8 des Formstücks 1 sind als Anschlagkanten ausgebildet und mit Vorsprüngen 9 und Ausnehmungen 10 versehen. Dabei sind die Vorsprünge 9 einer Stirnkante 7 im Wesentlichen form- und funktionskomplementär zu den Ausnehmungen 10 der gegenüberliegenden Stirnkante 8 ausgebildet.

Das in der Fig. 2 dargestellte Ausführungsbeispiel eines Formstückes 11 weist grundsätzlich den gleichen Aufbau wie das Formstück 1 auf, nämlich einen U-förmigen Querschnitt mit einem Basisbereich 12 und zwei Flanschbereichen 13 und 14. Im Gegensatz zum Ausführungsbeispiel nach Fig. 1 sind die Flanschbereiche 13 und 14 mit jeweils einem nach außen abgewinkelten Bereich 18 versehen, der sich im Wesentlichen parallel zum Basisbereich 12 erstreckt. Die Bereiche 18 sind jeweils mit durchgehenden Ausnehmungen 15 versehen, die in ihrer Funktion den Ausnehmungen 5 des Ausführungsbeispiels nach der Fig. 1 entsprechen. Mit ihren Bereichen 18 sind die Formstücke 12 an dazu form- und funktionskomplementären Flächen eines Riemens oder einer Kette zur An- bzw. zur Auflage bringbar und dort, beispielsweise mittels Befestigungsschraube oder -niet, befestigbar. Auch bei diesem Ausführungsbeispiel sind die Stirnkanten 17 und 18 des Formstücks 11 sind als Anschlagkanten ausgebildet und mit Vorsprüngen 19 und Ausnehmungen 20 versehen. Dabei sind die Vorsprünge 19 einer Stirnkante 17 wiederum form- und funktionskomplementär zu den Ausnehmungen 20 der gegenüberliegenden Stirnkante 18 ausgebildet.

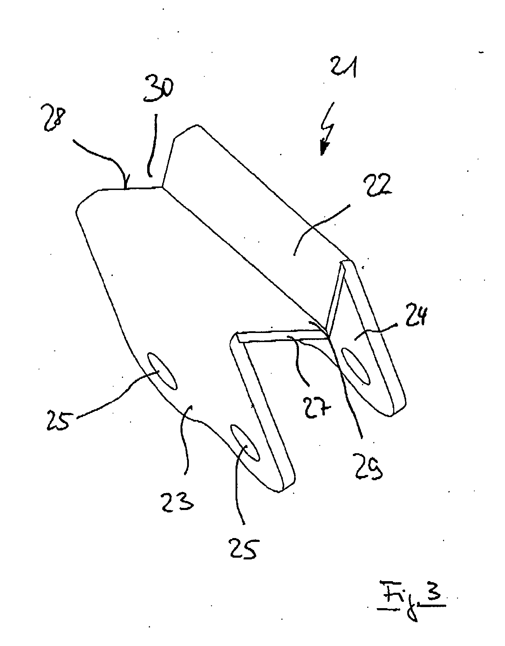

Das Ausführungsbeispiel eines Formstückes 21 gemäß der Erfindung der Fig. 3 entspricht grundsätzlich dem Ausführungsbeispiel nach Fig. 1. Dabei sind die Flanschbereiche 23 und 24 jedoch so ausgeführt, dass sie im auf einer Kette montierten Zustand gleichzeitig die Außenlaschen eines Kettengliedes bilden. Die Ausnehmungen 25 dienen bei diesem Ausführungsbeispiel zum Durchgriff der Gelenkbolzen des Kettengliedes, die gleichzeitig Befestigungsmittel für das Formstück 21 darstellen. Bei diesem Ausführungsbeispiel ist die Stirnkante 27 lediglich im Basisbereich 22 mit form- und funktionskomplementären Ausnehmungen 30 und Vorsprüngen 29 versehen.

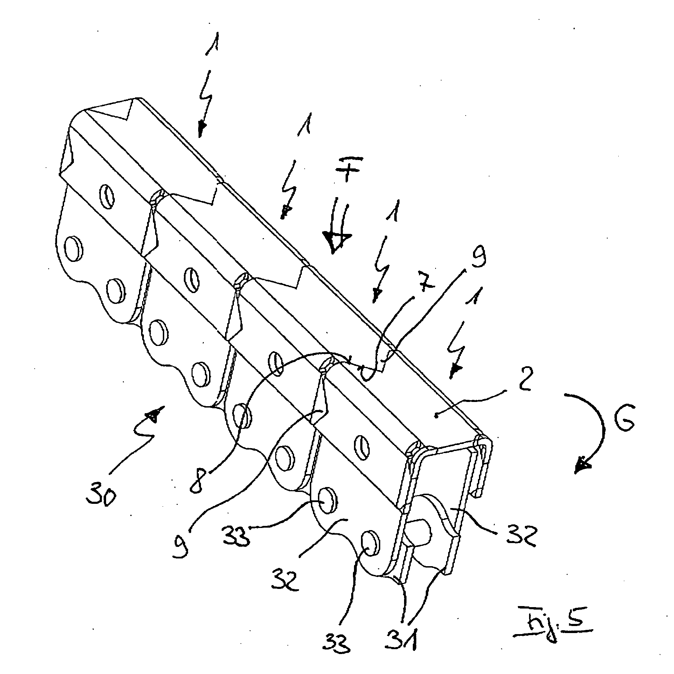

In Fig. 5 ist ein Ausführungsbeispiel eines linearen Stützelementes in Form einer Glieder- oder Gelenkkette 30 mit daran angeordneten Formstücken 1 nach der Fig. 1 dargestellt. Die Kette 30 weist in alternierender Folge Kettenglieder mit paarweise angeordneten Innenlaschen 31 und Außenlaschen 32 auf, die über Gelenkbolzen 33 miteinander gelenkig verbunden sind. Jeweils ein Paar einander gegenüberliegender Außenlaschen 32 wird durch ein Formstück 1 derart übergriffen, dass der Basisbereich 2 der durch die Gelenkbolzen 33 eines Kettengliedes gebildeten Ebene im wesentlichen parallel gegenüberliegt und die flanschartigen Bereiche 3 und 4 mit ihren Innenflächen an den Außenflächen der Außenlaschen 32 zur Anlage gelangen. Die Außenlaschen 32 sind mit durchgehenden Ausnehmungen versehen, die in montiertem Zustand der Formstücke mit den Ausnehmungen 5 fluchten, so dass die nicht dargcstellten Befestigungsmittel die fluchtenden Ausnehmungen durchgreifen können.

In der in der Fig. 5 gezeigten Stellung des linearen Stützelementes in Form der Kette 30 gelangen die Stirnkanten 7 und 8 benachbarter Formstücke 1 aneinander zur Anlage, wobei die Vorsprünge 9 eines Formstücks in die Ausnehmungen 10 des jeweils benachbarten Formstücks in Eingriff gelangen. Durch die gegenseitig Abstützung der Formstücke 1 bei einer in Richtung des Pfeils F wirkenden Kraft, insbesondere der Gewichtskraft der bestimmungsgemäß abzustützenden Schutzabdeckungselemente, wird eine Durchbiegung der Kette 30 zuverlässig verhindert, während eine Umlenkung der Kette 30 in Richtung des Pfeils G ungehindert möglich ist. Der Eingriff der Vorsprünge 9 in die Ausnehmungen 10 bewirkt dabei eine Zentrierung der Formstücke zueinander sowohl in vertikaler als auch in horizontaler Richtung.

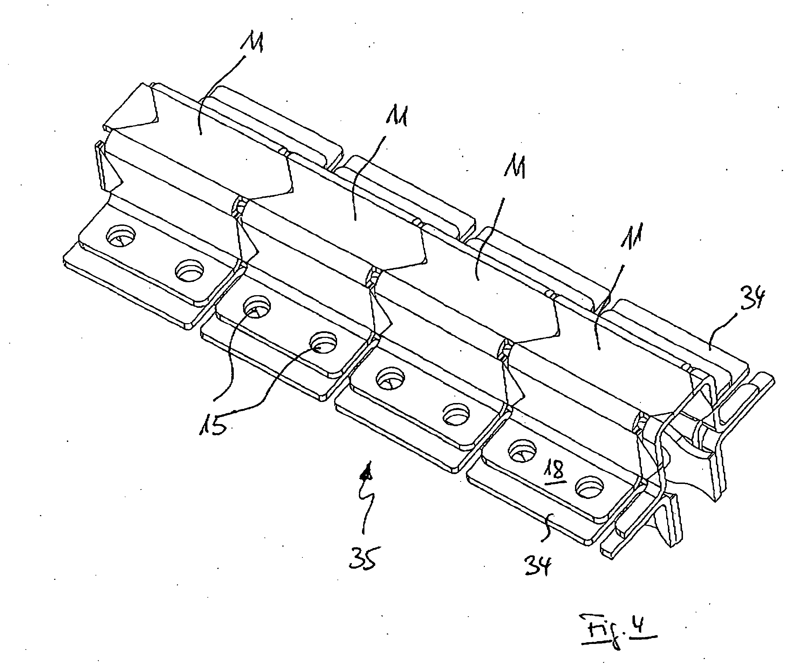

Das Ausführungsbeispiel nach den Figuren 2 und 4 unterscheidet sich vom Ausführungsbeispiel nach den Fig. 1 und 5 im wesentlichen dadurch, dass die Außenlaschen 34 jedes Kettengliedes der Gliederkette 35 nach außen abgewinkelt sind und so eine mit Ausnehmungen für den Durchtritt von Befestigungsmitteln versehene Tragfläche für die Formstücke 11 bilden, auf die die Formstücken mit den Bereich 18 zur Auflage gelangen.

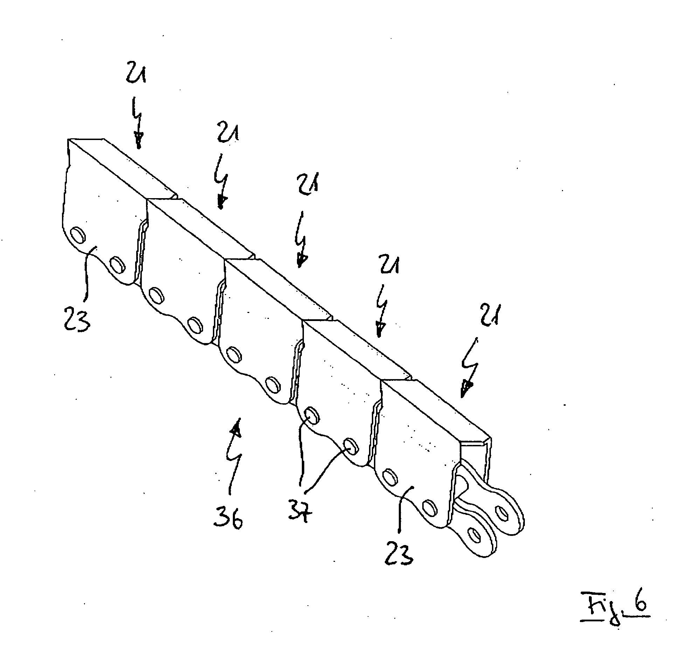

Beim Ausführungsbeispiel nach den Figuren 3 und 6 bilden die Formstücke 21 mit ihren Flanschbereichen 23 die Außenlaschen der Glieder der Gliederkette 36. Die Ausnehmungen 25 der Flanschbereiche 23 werden dabei von den Gelenkbolzen 37 der Gliederkette 36 durchgriffen.

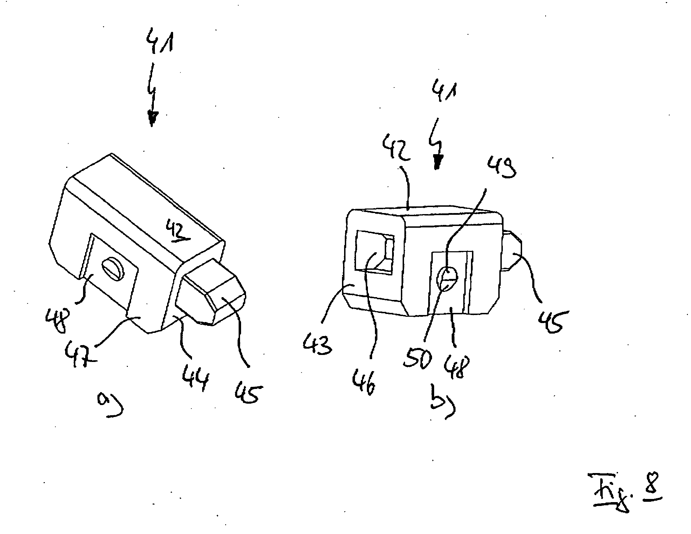

Während die Formstücke nach den Figuren 1 bis 3 einen im Wesentlichen U-förmigcn Querschnitt aufweisen und die zugehörigen Kettenglieder brückenartig überspannen, sind die Formstücke 41 nach der Fig. 8 im Wesentlichen blockartig ausgebildet. Die Basisfläche 42 ist als Auflagerfläche zur Abstützung der Schutzabdeckungselemente ausgebildet. Die beiden Stirnflächen 43 und 44 sind als Anschlagflächen ausgebildet.

Jeweils eine Stirnfläche 44 ist dabei mit einem zapfenartigen Vorsprung 45 versehen, während die jeweils gegenüberliegende Stirnfläche 43 eine Ausnehmung 46 aufweist, die im Wesentlichen form- und funktionskomplementär zum Vorsprung 45 ausgebildet ist.

Die Formstücke 41 sind im Bereich ihrer beiden einander gegenüberliegenden Seitenflächen 47 mit Ausnehmungen 48 versehen, in denen jeweils ein zapfenartiges Rastelement 49 mit einer Abschrägung 50 angeordnet ist.

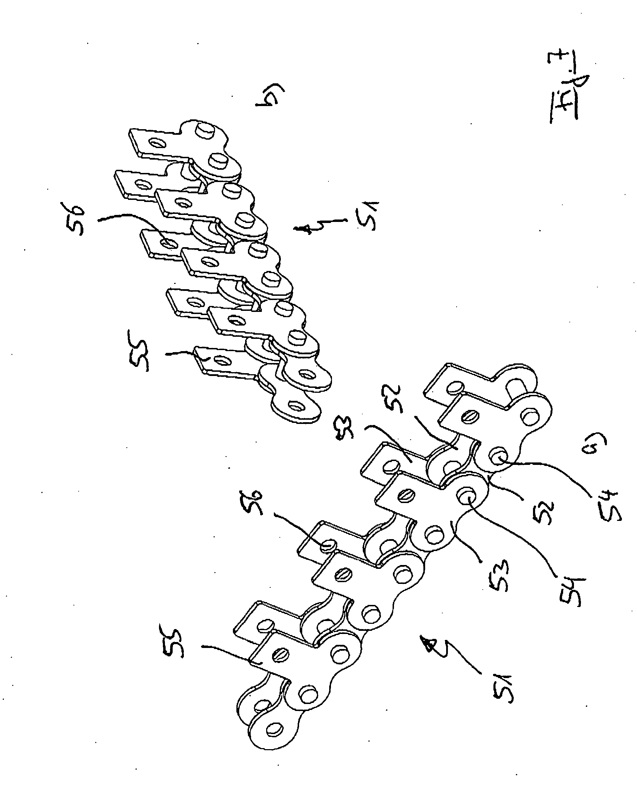

Das in der Fig. 7 dargestellte lineare Stützelement in Form der Glicdcrkette 51 weist paarweise angeordnete Innenlaschen 52 und Außenlaschen 53 auf, die über Gelenkbolzen 54 miteinander verbunden sind. Die Außenlaschen 53 weisen jeweils eine Befestigungslasche 55 mit einer Rastausnehmung 56 auf. Die Außenkontur der Befestigungslaschen 55 entspricht dabei im Wesentlichen der Innenkontur der Ausnehmung 48 des Formstücks 41.

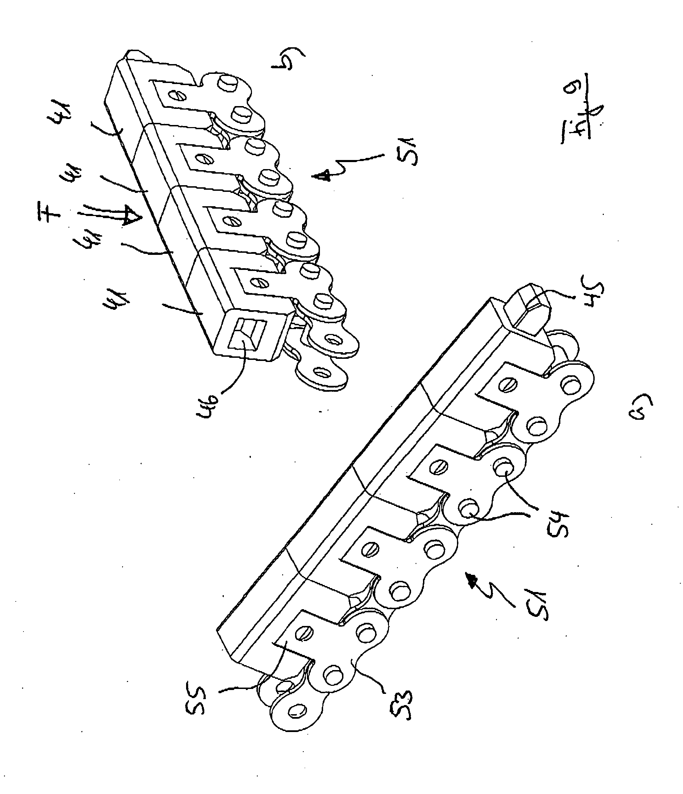

Zur Befestigung der Formstücke 41 auf den Gliedern der Gliederkette 51 werden die Formstücke, wie insbesondere aus Fig. 9 ersichtlich ist, so auf die Kettenglieder aufgesteckt, dass die Befestigungslaschen 55 im Wesentlichen formschlüssig in die Ausnehmungen 48 eingreifen. Die zapfenartigen Rastelementc 49 gelangen dabei in die Rastausnehmungen 56 in Rasteingriff, wobei das selbsttätige Einrasten beim Aufstecken der Formstücke durch die Schrägflächen 50 der Rastelemente 49 begünstigt wird.

Wie weiter aus Fig. 9 ersichtlich ist, greifen in der in Fig. 9 gezeigten Stellung der Gliederkette 51 die zapfenartigen Vorsprünge 45 eines jeden Formstücks 41 in die Ausnehmungen 46 des jeweils benachbarten Formstücks ein, wobei die zueinander weisenden Anschlagflächen 43 bzw. 44 benachbarter Formstücke aneinander zur Anlage gelangen und so die Formstücke gegeneinander abstützend die Gliederkette 51 gegen eine Durchbiegung in Richtung des Pfeils F stabilisieren.

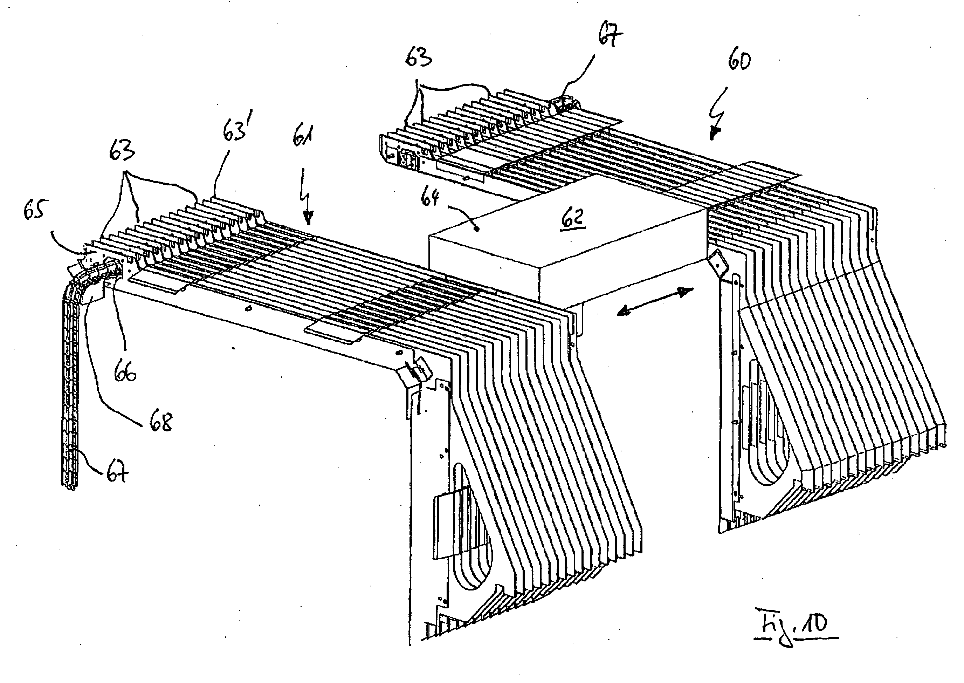

In der Fig. 10 sind zwei Schutzabdeckungen 60 und 61 dargestellt, die an jeweils gegenüberliegenden Seiten des Schlittens 62 einer im Übrigen nicht dargestellten Werkzeugmaschine angeordnet sind. Die Schutzabdeckungen 60, 61 weisen jeweils eine Vielzahl von Schutzabdeckungselementen 63 auf, die jeweils über nicht dargestellte Verbindungselemente zugkraftübertragend miteinander verbunden sind. Die Schutzabdeckungselemente 63 weisen dabei in an sich bekannter Weise einen im Wesentlichen L-förmigen Querschnitt auf, wobei ein erster Schenkel, der in der Darstellung nach Fig. 10 im wesentlichen parallel zur Oberfläche 64 des Schlittens 62 verläuft, die eigentliche Abdeckung darstellt und ein zweiter Schenkel 65, der im wesentlichen senkrecht dazu verläuft, zur Stabilisierung, Abstützung und Führung der Schenkel sowie zur zugkraftübertragenden Verbindung mit den Nachbarschenkeln dient. Die ersten Schenkel überlappen sich dabei teleskopartig und bilden im gesamten Verfahrweg der Schutzabdeckung eine im Wesentlichen geschlossene Schutzabdeckung.

Im zweiten Schenkel 65 weisen die Schutzabdeckungselemente 63 jeweils eine durchgehende Ausnehmung 66 auf, die von einem linearen Stützelemcnt in Form einer Gelenkkette 67 mit darauf angeordneten Formstücken, wie in den vorstehend erläuterten Figuren beschrieben, durchgriffen werden. Mit dem ersten Ende ist die Gelenkkette 67 am ersten Schutzabdeckungselement 63' befestigt, das wiederum am Schlitten der Werkzeugmaschine befestigt ist. Das zweite freie Ende der Gelenkkette 67 wird über eine Umlenkeinrichtung 68 in Form eines Umlenkbleches, die ortsfest am Rahmen der Werkzeugmaschine befestigt ist, nach unten umgelenkt. Die Schutzabdeckungselemente 63 liegen mit den Kantenbereichen der Ausnehmung 66 auf den Oberflächen der Formstücke der Gelenkkette 67 auf und werden dort abstützend gelagert und geführt.

Wird nun der Schlitten im Betrieb der Werkzeugmaschine in der Darstellung der Fig. 10 nach rechts bewegt, wird die rechte Schutzabdeckung 60 zusammen geschoben und die linke Schutzabdeckung 61 auseinander gezogen. Umgekehrt erfolgt bei einer gegenläufigen Bewegung ein Zusammenschieben der Schutzabdeckung 61 und ein Auseinanderzichen der Schutzabdeckung 60. Die Schutzabdeckungselemente 63 gleiten dabei über die Formstücke der Gelenkkette 67, die mit zunehmendem Verfahrweg mit ihrem freien Ende umgelenkt wird.

## Patentansprüche

1. Selbsttragende Führungseinrichtung für eine Schutzabdeckung (60, 61) zur Abdeckung beweglicher Teile an Werkzeugmaschinen oder dergleichen, mit einer Mehrzahl von sich quer zur Längsachse der Schutzabdeckung (60, 61) erstreckenden Schutzabdeckungselementen (63), die (63) durch mindestens ein zugkraftübertragendes Koppelglied miteinander verbunden sind,
**gekennzeichnet** t durch
mindestens ein sich im wesentlichen in Längsrichtung der Schutzabdeckung (60, 61) erstreckendes bewegliches lineares Stützelement zur Abstützung der Schutzabdeckungselemente (61), dessen erstes Ende mittelbar oder unmittelbar an einem beweglichen Schlitten (62) der Werkzeugmaschine oder dergleichen befestigbar ist und dessen zweites Ende beim Verfahren der Schutzabdeckung (60, 61) über eine Umlenkvorrichtung (68) umgelenkt wird.

2. Führungseinrichtung nach Anspruch 1,
**dadurch gekennzeichnet,**
**dass** die Umlenkvorrichtung (68) innerhalb des durch die Schutzabdeckung (60, 61) bestimmungsgemäß abgedeckten Bereichs angeordnet ist.

3. Führungseinrichtung nach Anspruch 1 oder 2,
**dadurch gekennzeichnet,**
**dass** das Stützelement mindestens einen Riemen aufweist, an dem Formstücke derart angeordnet sind, dass die Formstücke in im wesentlichen gerader Anordnung des Riemens derart aneinander zur Anlage gelangen und/oder ineinander eingreifen, dass eine Durchbiegung des Stützelementes aufgrund der Gewichtskraft der abzustützenden Schutzabdeckungselemente verhindert wird.

4. Führungseinrichtung nach Anspruch 1 oder 2,
**dadurch gekennzeichnet,**
**dass** das Stützelement mindestens eine Kette (30, 35, 36, 51, 67) aufweist, an der Formstücke (01, 11, 21, 41) derart angeordnet sind, dass die Formstücke (01, 11, 21, 41) in im wesentlichen gerader Anordnung der Kette (30, 35, 36, 51, 67) derart aneinander zur Anlage gelangen und/oder ineinander eingreifen, dass eine Durchbiegung des Stützelementes aufgrund der Gewichtskraft der abzustützenden Schutzabdeckungselemente (63) verhindert wird.

5. Führungseinrichtung nach Anspruch 4,
**dadurch gekennzeichnet,**
**dass** die Kette als Gelenkkette (30, 35, 36, 51, 67), insbesondere als Bolzenkette, Buchsenkette oder Rollenkette ausgebildet ist.

6. Führungseinrichtung nach einem der Ansprüche 1 bis 5,
**dadurch gekennzeichnet,**
**dass** die Formstücke (01, 11, 21) im Wesentlichen U-förmig ausgebildet sind, wobei der Basisbereich (02, 12, 22) dem Riemen oder der Kette (30, 35, 36, 67) mit Abstand gegenüberliegt und mindestens einer der beiden Flanschbereiche (03, 04, 13, 14, 34, 24) am Riemen oder der Kette (30, 35, 36, 67) befestigt ist.

7. Führungseinrichtung nach Anspruch 6,
**dadurch gekennzeichnet,**
**dass** die von Riemen oder Kette (30, 35, 36, 67) wegweisende Fläche (06) des Basisbereichs (02, 12, 22) als Auflagerfläche für die Schutzabdeckungselemente (63) ausgebildet ist.

8. Führungseinrichtung nach Anspruch 6 oder 7,
**dadurch gekennzeichnet,**
**dass** die jeweils zueinander weisenden Kantenbereiche des Basisbereichs (02, 12, 22) und/oder der Flanschbereiche (03, 04, 13, 14, 34, 24) jeweils benachbarter Formstücke (01, 11, 21) als Anschlagskanten (07, 08, 17, 27, 28) ausgebildet sind.

9. Führungseinrichtung nach Anspruch 8,
**dadurch gekennzeichnet,**
**dass** die Anschlagskanten (08, 28) des Basisbereichs (02, 12, 22) jeweils eines Formstückes (01, 11, 21) mindestens eine Ausnehmung (10, 20, 30) aufweisen, in die (10, 20, 31) ein dazu form- und funktionskomplementärer Vorsprung (09, 19, 29) der Anschlagskanten (07, 17, 27) des Basisbereichs (02, 12, 22) der jeweils benachbarten Formstücke (01, 11, 21) in Eingriff bringbar ist.

10. Führungseinrichtung nach Anspruch 8 oder 9,
**dadurch gekennzeichnet,**
**dass** die Anschlagskanten (08, 28) der Flanschbereiche (03, 04, 13, 14, 34, 24) jeweils eines Formstückes (01, 11,21) mindestens eine Ausnehmung (10, 20) aufweisen, in die ein dazu form- und funktionskomplementärer Vorsprung (09, 19, 29) des Anschlagskanten (07, 17, 27) der Flanschbereiche (03, 04, 13, 14, 34, 24) der jeweils benachbarten Formstücke (01, 11, 21) in Eingriff bringbar ist.

11. Führungseinrichtung nach Anspruch 9 oder 10,
**dadurch gekennzeichnet,**
**dass** die Vorsprünge (09, 19, 29) und Ausnehmungen (10, 20) im Wesentlichen keilförmig ausgebildet sind.

12. Führungseinrichtung nach einem der Ansprüche 3 bis 11,
**dadurch gekennzeichnet,**
**dass** die Formstücke (01, 11, 21, 41) derart dimensioniert und/oder angeordnet sind, dass der Riemen oder die Kette (30, 35, 36, 51, 67) beim im wesentlichen gerader Anordnung unter zumindest geringfügiger Vorspannung stehen.

13. Führungseinrichtung nach einem der Ansprüche 4 bis 12,
**dadurch gekennzeichnet,**
**dass** die Kette (30, 35, 36, 51, 67) paarweise angeordnete Innen- (31, 52) und Außenlaschen (32, 53) aufweist, wobei die Flanschbereiche (03, 04, 13, 14, 34, 24) jeweils eines Formstückes (01, 11, 21) an jeweils ein Paar Innen- (31, 52) oder Außenlaschen (32, 53) eines Kettengliedes angeformt oder an diesen befestigt sind.

14. Führungseinrichtung nach einem der Ansprüche 4 bis 13,
**dadurch gekennzeichnet,**
**dass** die Außen- (32, 53) oder Innenlaschen (31, 52) der Kettenglieder jeweils einen nach außen weisenden flanschartigen Absatz (34) aufweisen und die Flanschbereiche (03, 04, 13, 14, 34, 24) der Formstücke (01, 11, 21) mit einer ebenfalls nach außen weisenden Abkantung (18) versehen sind, wobei die Formstücke (01, 11, 21) mit ihren Abkantungen (18) auf den flanschartigen Absätzen (34) der Kettenglieder zur Anlage gelangen und dort befestigbar sind.

15. Führungseinrichtung nach einem der Ansprüche 1 bis 5,
**dadurch gekennzeichnet,**
**dass** die Formstücke (41) im wesentlichen blockartig ausgebildet sind, wobei die jeweils zueinander weisenden Flächen jeweils benachbarter Formstücke (41) zumindest bereichsweise als Anschlagsflächen (43, 44) ausgebildet sind.

16. Führungseinrichtung nach Anspruch 15,
**dadurch gekennzeichnet,**
**dass** die zueinander weisenden Flächen (43, 44) jeweils benachbarter Formstücke (41) mit Ausnehmungen (46) und/oder Vorsprüngen (45) versehen sind, dergestalt dass die Vorsprünge (45) eines Formstückes (41) in die Ausnehmungen (46) mindestens eines benachbarten Formstückes (41) in Eingriff bringbar sind.

17. Führungseinrichtung nach Anspruch 15 oder 16,
**dadurch gekennzeichnet,**
**dass** die Formstück (41) im Bereich ihrer Seitenflächen (47) jeweils mindestens eine Ausnehmung (48) aufweisen, in die (48) an den Innen- (52) oder Außenlaschen (53) eines Kettengliedes angeformte Befestigungslaschen (55) in Eingriff bringbar sind.

18. Führungseinrichtung nach Anspruch 17,
**dadurch gekennzeichnet,**
**dass** jede Ausnehmung (48) mindestens ein Rastelement (49) aufweist, das (49) in eine dazu form- und/oder funktionskomplementäre Ausnehmung (56) der Befestigungslasche (55) des entsprechenden Kettengliedes in Eingriff bringbar ist.

19. Führungseinrichtung nach Anspruch 17,
**dadurch gekennzeichnet,**
**dass** jede Befestigungslasche mindestens ein Rastelement aufweist, das in eine dazu form- und/oder funktionskomplementäre Ausnehmung in der Ausnehmung des Formstücks in Eingriff bringbar ist.

20. Führungseinrichtung nach einem der Ansprüche 1 bis 19,
**dadurch gekennzeichnet,**
**dass** die Auflagerbereiche der Formstücke (01, 11, 21, 41) und/oder die zugeordneten Auflagerbereiche der Schutzabdeckungselemente (63) mit Gleitmitteln versehen sind.

21. Führungseinrichtung nach einem der Ansprüche 1 bis 20
**dadurch gekennzeichnet,**
**dass** die Umlenkeinrichtung (68) eine Umlenkfläche, eine Umlenkrolle oder ein Umlenkzahnrad aufweist.

22. Führungseinrichtung nach Anspruch 21,
**dadurch gekennzeichnet,**
**dass** die Umlenkrolle oder das Umlenkzahnrad antreibbar sind.

23. Führungseinrichtung nach einem der Ansprüche 1 bis 22,
**dadurch gekennzeichnet,**
**dass** im Bereich nach der Umlenkeinrichtung (68) eine Einrichtung zur Aufbringung einer Zugkraft auf das Stützelement angeordnet ist.

24. Führungseinrichtung nach einem der Ansprüche 1 bis 23,
**dadurch gekennzeichnet,**
**dass** im Bereich der Umlenkeinrichtung (68) eine Einrichtung zur Aufbringung einer zumindest geringfügigen Anpresskraft auf das Stützelement gegen die Umlenkeinrichtung (68) vorgesehen ist.

25. Führungseinrichtung nach Anspruch 24,
**dadurch gekennzeichnet,**
**dass** die Einrichtung zur Aufbringung einer Anpresskraft eine vorzugsweise federbelastete Anpressrolle aufweist.

26. Selbsttragende Führungseinrichtung für eine Schutzabdeckung (60, 61) zur Abdeckung beweglicher Teile an Werkzeugmaschinen oder dergleichen, mit einer Mehrzahl von sich quer zur Längsachse der Schutzabdeckung (60, 61) erstreckenden Schutzabdeckungselementen (63), die (63) durch mindestens ein zugkraftübertragendes Koppelglied miteinander verbunden sind,
**gekennzeichnet** t durch
mindestens ein sich im wesentlichen in Längsrichtung der Schutzabdeckung (60, 61) erstreckendes bewegliches lineares teleskopartig ausgebildetes Stützelement zur Abstützung der Schutzabdeckungselemente (63), dessen erstes Ende mittelbar oder unmittelbar an einem beweglichen Schlitten (62) der Werkzeugmaschine oder dergleichen befestigbar ist und dessen zweites Ende im wesentlichen ortsfest mittelbar oder unmittelbar am Rahmen der Werkzeugmaschine oder dergleichen angeordnet ist, wobei das teleskopartige Stützelement beim Verfahren der Schutzabdeckung (60, 61) aus- bzw. eingefahren wird.

27. Schutzabdeckung (60, 61) mit einer Führungseinrichtung nach einem der Ansprüche 1 bis 26,
**dadurch gekennzeichnet,**
**dass** die Schutzabdeckung (60, 61) nach Art eines Faltenbalges ausgebildet ist, wobei die Schutzabdeckungselemente (63) die Stützrahmen des Faltenbalges bilden.

28. Schutzabdeckung (60, 61) mit einer Führungseinrichtung nach einem der Ansprüche 1 bis 26,
**dadurch gekennzeichnet,**
**dass** die Schutzabdeckungselemente (63) einander teleskopartig gegeneinander verschiebbar übergreifen und zumindest abschnittsweise einen im wesentlichen U- oder L-förmigen Querschnitt aufweisen.

## Claims

1. A self-supporting guide device for a protective covering (60, 61) for covering mobile parts on machine tools or the like, comprising a plurality of protective covering elements (63) which extend transversely to the longitudinal axis of the protective covering (60, 61) and are connected to each other by at least one tensile force-transmitting coupling member,
**characterised by**
at least one mobile linear support element which substantially extends in the longitudinal direction of the protective covering (60, 61) for supporting the protective covering elements (61), the first end of said support element being directly or indirectly attachable to a movable slide (62) of the machine tool or the like and the second end thereof being deflected via a deflecting device (68) when the protective covering (60, 61) is being moved.

2. The guide device according to claim 1,
**characterised in that**
the deflection device (68) is arranged within the area covered as intended by the protective covering (60, 61).

3. The guide device according to claim 1 or 2,
**characterised in that**
the support element has at least one belt on which moulded pieces are arranged in such a manner that in a substantially straight arrangement of the belt, the moulded pieces come into contact with each other and/or engage into each other in such a way that a bending of the support element due to the weight of the protective covering elements to be supported is prevented.

4. The guide device according to claim 1 or 2,
**characterised in that**
the support element has at least one chain (30, 35, 36, 51, 67) on which moulded pieces (01, 11, 21, 41) are arranged in such a manner that in a substantially straight arrangement of the chain (30, 35, 36, 51, 67), the moulded pieces (01, 11, 21, 41) come into contact with each other and/or engage into each other in such a way that a bending of the support element due to the weight of the protective covering elements (63) to be supported is prevented.

5. The guide device according to claim 4,
**characterised in that**
the chain is formed as a link chain (30, 35, 36, 51, 67), in particular as a bolt chain, bush chain or roller chain.

6. The guide device according to any of the claims 1 to 5,
**characterised in that**
the moulded pieces (01, 11, 21) are formed substantially U-shaped, the base portion (02, 12, 22) lying opposite of the belt or of the chain (30, 35, 36, 67) at a distance and at least one of the two flange portions (03, 04, 13, 14, 34, 24) being attached to the belt or to the chain (30, 35, 36, 67).

7. The guide device according to claim 6,
**characterised in that**
the surface (06) of the base portion (02, 12, 22) which faces away from the belt or chain (30, 35, 36, 67) is formed as a bearing surface for the protective covering elements (63).

8. The guide device according to claim 6 or 7,
**characterised in that**
the edge portions, which respectively face each other, of the base portion (02, 12, 22) and/or of the flange portions (03, 04, 13, 14, 34, 24) of respectively adjacent moulded pieces (01, 11, 21) are formed as abutment edges (07, 08, 17, 27, 28).

9. The guide device according to claim 8,
**characterised in that**
the abutment edges (08, 28) of the base portion (02, 12, 22) of each moulded piece (01, 11, 21) comprise at least one recess (10, 20, 30), into which (10, 20, 30) a projection (09, 19, 29), which is complementary thereto in form and function, of the abutment edges (07, 17, 27) of the base portion (02, 12, 22) of the respectively adjacent moulded pieces (01, 11, 21) can be brought to engage.

10. The guide device according to claim 8 or 9,
**characterised in that**
the abutment edges (08, 28) of the flange areas (03, 04, 13, 14, 34, 24) of each moulded piece (01, 11, 21) have at least one recess (10, 20) into which a projection (09, 19, 29), which is complementary thereto in form and function, of the abutment edges (07, 17, 27) of the flange areas (03, 04, 13, 14, 34, 24) of the respectively adjacent moulded pieces (01, 11, 21) can be brought to engage.

11. The guide device according to claim 9 or 10,
**characterised in that**
the projections (09, 19, 29) and recesses (10, 20) are substantially formed to be wedge-shaped.

12. The guide device according to any of the claims 3 to 11,
**characterised in that**
the moulded pieces (01, 11, 21, 41) are dimensioned and/or arranged such that the belt or the chain (30, 35, 36, 51, 67) are at least slightly pre-tensioned while being arranged substantially straight.

13. The guide device according to any of the claims 4 to 12,
**characterised in that**
the chain (30, 35, 36, 51, 67) has inner (31, 52) and outer (32, 53) tongues which are arranged in pairs, the flange areas (03, 04, 13, 14, 34, 24) of one moulded piece (01, 11, 21) being moulded or attached to one pair of inner (31, 52) or outer tongues (32, 53) of a chain member in each case.

14. The guide device according to any of the claims 4 to 13,
**characterised in that**
the outer (32, 53) or inner tongues (31, 52) of the chain members each have a flange-type shoulder (34) which faces to the outside, and the flange areas (03, 04, 13, 14, 34, 24) of the moulded pieces (01, 11, 21) are provided with a splay (18) which also faces to the outside, the moulded pieces (01, 11, 21) coming to rest with their splays (18) on the flange-type shoulders (34) of the chain members and being attachable there.

15. The guide device according to any of the claims 1 to 5,
**characterised in that**
the moulded pieces (41) are formed substantially block-like, the surfaces of respectively adjacent moulded pieces (41) which respectively face each other being formed at least in sections as abutment surfaces (43, 44).

16. The guide device according to claim 15,
**characterised in that**
the surfaces (43, 44) of respectively adjacent moulded pieces (41) which face each other are provided with recesses (46) and/or projections (45) in such a manner that the projections (45) of a moulded piece (41) can be brought to engage into the recesses (46) of at least one adjacent moulded piece (41).

17. The guide device according to claim 15 or 16,
**characterised in that**
in the area of their lateral surfaces (47), the moulded pieces (41) each have at least one recess (48), into which (48) fastening tongues (55) which are moulded to the inner (52) or outer tongues (53) of a chain member can be brought to engage.

18. The guide device according to claim 17,
**characterised in that**
each recess (48) has at least one latching element (49), which (49) can be brought to engage into a recess (56), which is complementary thereto in form and/or function, of the fastening tongue (55) of the corresponding chain member.

19. The guide device according to claim 17,
**characterised in that**
each fastening tongue has at least one latching element which can be brought to engage into a recess, which is complementary thereto in form and/or function, in the recess of the moulded piece.

20. The guide device according to any of the claims 1 to 19,
**characterised in that**
the bearing portions of the moulded pieces (01, 11, 21, 41) and/or the associated bearing portions of the protective covering elements (63) are provided with lubricants.

21. The guide device according to any of the claims 1 to 20,
**characterised in that**
the deflection device (68) has a deflection surface, a deflection roller or a deflection gear wheel.

22. The guide device according to claim 21,
**characterised in that**
the deflection roller or the deflection gear wheel are drivable.

23. The guide device according to any of the claims 1 to 22,
**characterised in that**
in the area following the deflection device (68), a device for exerting a tensile force onto the support element is arranged.

24. The guide device according to any of the claims 1 to 23,
**characterised in that**
in the area of the deflection device (68), a device for exerting an at least slight contact pressure force onto the support element against the deflection device (68) is provided.

25. The guide device according to claim 24,
**characterised in that**
the device for exerting a contact pressure force preferably has a spring-loaded pressure roller.

26. A self-supporting guide device for a protective covering (60, 61) for covering mobile parts on machine tools or the like, comprising a plurality of protective covering elements (63) which extend transversely to the longitudinal axis of the protective covering (60, 61) and are connected to each other by at least one tensile force-transmitting coupling member,
**characterised by**
at least one mobile linear support element which substantially extends in the longitudinal direction of the protective covering (60, 61) and is formed telescopically for supporting the protective covering elements (63), the first end of said support element being directly or indirectly attachable to a movable slide (62) of the machine tool or the like and the second end thereof being arranged directly or indirectly in a substantially stationary manner on the frame of the machine tool or the like, the telescopic support element being extended or retracted when the protective covering (60, 61) is being moved.

27. The protective covering (60, 61) having a guiding device according to any of the claims 1 to 26,
**characterised in that**
the protective covering (60, 61) is formed in the manner of a bellow, the protective covering elements (63) forming the support frames of the bellow.

28. The protective covering (60, 61) having a guiding device according to any of the claims 1 to 26,
**characterised in that**
the protective covering elements (63) cover each other in a manner so as to be telescopically slidable against each other and have at least in sections a substantially U-shaped or L-shaped cross-section.

## Revendications

1. Dispositif de guidage autoportant pour un capot de protection (60, 61) pour couvrir des pièces mobiles à des machines-outils ou similaires, comprenant une pluralité d'éléments de capot de protection (63) s'étendant transversalement à l'axe longitudinal du capot de protection (60, 61) et étant connectés l'un à l'autre par au moins un organe de couplage transmettant de la force de traction,
**caractérisé par**
au moins un élément de support mobile linéaire s'étendant essentiellement dans la direction longitudinale du capot de protection (60, 61) pour supporter les éléments de capot de protection (61), dont la première extrémité peut être attachée directement ou indirectement à un chariot (62) mobile de la machine-outil ou similaire et dont la deuxième extrémité est déviée par un dispositif de déviation (68) lors du déplacement du capot de protection (60, 61).

2. Dispositif de guidage selon la revendication 1,
**caractérisé en ce que**
le dispositif de déviation (68) est disposé dans l'espace qui est couvert par le capot de protection (60, 61) conformément à sa destination.

3. Dispositif de guidage selon les revendications 1 ou 2,
**caractérisé en ce que**
l'élément de support a au moins une courroie sur laquelle des pièces moulées sont disposées de telle façon qu'en disposition essentiellement droite de la courroie, les pièces moulées viennent en appui l'une contre l'autre et/ou s'engagent l'une dans l'autre de telle manière qu'un fléchissement de l'élément de support en raison du poids des éléments de capot de protection à supporter soit empêché.

4. Dispositif de guidage selon les revendications 1 ou 2,
**caractérisé en ce que**
l'élément de support a au moins une chaîne (30, 35, 36, 51, 67) sur laquelle des pièces moulées (01, 11, 21, 41) sont disposées de telle façon qu'en disposition essentiellement droite de la chaîne (30, 35, 36, 51, 67), les pièces moulées (01, 11, 21, 41) viennent en appui l'une contre l'autre et/ou s'engagent l'une dans l'autre de telle manière qu'un fléchissement de l'élément de support en raison du poids des éléments de capot de protection (63) soit empêché.

5. Dispositif de guidage selon la revendication 4,
**caractérisé en ce que**
la chaîne est formée comme chaîne articulée (30, 35, 36, 51, 67), en particulier comme chaîne à boulons, chaîne à douilles ou chaîne à rouleaux.

6. Dispositif de guidage selon l'une quelconque des revendications 1 à 5,
**caractérisé en ce que**
les pièces moulées (01, 11, 21) sont formées essentiellement sous forme de U, la partie de base (02, 12, 22) faisant face à la courroie ou à la chaîne (30, 35, 36, 67) à une distance et au moins une des deux parties de bride (03, 04, 13, 14, 34, 24) étant attachée à la courroie ou à la chaîne (30, 35, 36, 67).

7. Dispositif de guidage selon la revendication 6,
**caractérisé en ce que**
la surface (06) de la partie de base (02, 12, 22) détournée de la courroie ou chaîne (30, 35, 36, 67) est formée comme surface d'appui pour les éléments de capot de protection (63).

8. Dispositif de guidage selon les revendications 6 ou 7,
**caractérisé en ce que**
les parties de bord, orientées respectivement l'une à l'autre, de la partie de base (02, 12, 22) et/ou des parties de bride (03, 04, 13, 14, 34, 24) de pièces moulées (01, 11, 21) respectivement adjacentes sont formées comme bords de butée (07, 08, 17, 27, 28).

9. Dispositif de guidage selon la revendication 8,
**caractérisé en ce que**
les bords de butée (08, 28) de la partie de base (02, 12, 22) de chaque pièce moulée (01, 11, 21) ont au moins un évidement (10, 20, 30) dans lequel (10, 20, 30) une saillie (09, 19, 29), complémentaire en forme et fonction à celui-ci, des bords de butée (07, 17, 27) de la partie de base (02, 12, 22) des pièces moulées (01, 11, 21) respectivement adjacentes peut être engagée.

10. Dispositif de guidage selon les revendications 8 ou 9,
**caractérisé en ce que**
les bords de butée (08, 28) des parties de bride (03, 04, 13, 14, 34, 24) de chaque pièce moulée (01, 11, 21) ont au moins un évidement (10, 20) dans lequel une saillie (09, 19, 29), complémentaire en forme et fonction à celui-ci, des bords de butée (07, 17, 27) des parties de bride (03, 04, 13, 14, 34, 24) des pièces moulées (01, 11, 21) respectivement adjacentes peut être engagée.

11. Dispositif de guidage selon les revendications 9 ou 10,
**caractérisé en ce que**
les saillies (09, 19, 29) et évidements (10, 20) sont formés essentiellement en forme de coin.

12. Dispositif de guidage selon l'une quelconque des revendications 3 à 11,
**caractérisé en ce que**
les pièces moulées (01, 11, 21, 41) sont dimensionnées et/ou disposées de telle façon que la courroie ou la chaîne (30, 35, 36, 51, 67) soient sous prétension au moins faible lors de la disposition essentiellement droite.

13. Dispositif de guidage selon l'une quelconque des revendications 4 à 12,
**caractérisé en ce que**
la chaîne (30, 35, 36, 51, 67) a des languettes intérieures (31, 52) et extérieures (32, 53) disposées par paires, les parties de bride (03, 04, 13, 14, 34, 24) d'une pièce moulée (01, 11, 21) étant moulées ou attachées à chaque fois à une paire de languettes intérieures (31, 52) ou extérieures (32, 53) d'un chaînon.

14. Dispositif de guidage selon l'une quelconque des revendications 4 à 13,
**caractérisé en ce que**
chacune des languettes extérieures (32, 53) ou intérieures (31, 52) des chaînons a un épaulement (34) en forme de bride orienté vers l'extérieur et les parties de bride (03, 04, 13, 14, 34, 24) des pièces moulées (01, 11, 21) sont pourvues d'un chanfrein (18) également orienté vers l'extérieur, les pièces moulées (01, 11, 21) venant en appui avec leur chanfreins (18) sur les épaulements en forme de bride (34) des chaînons et pouvant y être attachées.

15. Dispositif de guidage selon l'une quelconque des revendications 1 à 5,
**caractérisé en ce que**
les pièces moulées (41) sont formées essentiellement en forme de bloc, les surfaces orientées respectivement l'une à l'autre de pièces moulées (41) respectivement adjacentes étant formées au moins en partie comme surfaces de butée (43, 44).

16. Dispositif de guidage selon la revendication 15,
**caractérisé en ce que**
les surfaces (43, 44) orientées l'une à l'autre de pièces moulées (41) respectivement adjacentes sont pourvues d'évidements (46) et/ou de saillies (45) de telle façon que les saillies (45) d'une pièce moulée (41) puissent être engagées dans les évidements (46) d'au moins une pièce moulée (41) adjacente.

17. Dispositif de guidage selon les revendications 15 ou 16,
**caractérisé en ce que**
chacune des pièces moulées (41) a au moins un évidement (48) dans la région de ses surfaces latérales (47), dans lequel (48) des languettes d'attachement (55) moulées aux languettes intérieures (52) ou extérieures (53) d'un chaînon peuvent être engagées.

18. Dispositif de guidage selon la revendication 17,
**caractérisé en ce que**
chaque évidement (48) a au moins un élément d'arrêt (49) qui (49) peut être engagé dans un évidement (56), complémentaire en forme et/ou fonction à celui-ci, de la languette d'attachement (55) du chaînon correspondant.

19. Dispositif de guidage selon la revendication 17,
**caractérisé en ce que**
chaque languette d'attachement a au moins un élément d'arrêt qui peut être engagé dans un évidement, complémentaire en forme et/ou fonction à celui-ci, dans l'évidement de la pièce moulée.

20. Dispositif de guidage selon l'une quelconque des revendications 1 à 19,
**caractérisé en ce que**
les parties d'appui des pièces moulées (01, 11, 21, 41) et/ou les parties d'appui associées des éléments de capot de protection (63) sont pourvues de lubrifiants.

21. Dispositif de guidage selon l'une quelconque des revendications 1 à 20,
**caractérisé en ce que**
le dispositif de déviation (68) a une surface de déviation, une poulie de déviation ou une roue dentée de déviation.

22. Dispositif de guidage selon la revendication 21,
**caractérisé en ce que**
la poulie de déviation ou la roue dentée de déviation peuvent être entraînées.

23. Dispositif de guidage selon l'une quelconque des revendications 1 à 22,
**caractérisé en ce qu'**
un dispositif pour appliquer une force de traction sur l'élément de support est disposé dans la région suivant le dispositif de déviation (68).

24. Dispositif de guidage selon l'une quelconque des revendications 1 à 23,
**caractérisé en ce qu'**
un dispositif pour appliquer une force de pression au moins faible sur l'élément de support contre le dispositif de déviation (68) est prévu dans la région du dispositif de déviation (68).

25. Dispositif de guidage selon la revendication 24,
**caractérisé en ce que**
le dispositif pour appliquer une force de pression a un rouleau de pression chargé de préférence à ressort.

26. Dispositif de guidage autoportant pour un capot de protection (60, 61) pour couvrir des pièces mobiles à des machines-outils ou similaires, comprenant une pluralité d'éléments de capot de protection (63) s'étendant transversalement à l'axe longitudinal du capot de protection (60, 61) et étant connectés l'un à l'autre par au moins un organe de couplage transmettant de la force de traction,
**caractérisé par**
au moins un élément de support mobile linéaire s'étendant essentiellement dans la direction longitudinale du capot de protection (60, 61) et étant formé de manière télescopique pour supporter les éléments de capot de protection (63), dont la première extrémité peut être attachée directement ou indirectement à un chariot (62) mobile de la machine-outil ou similaire et dont la deuxième extrémité est disposée directement ou indirectement de manière stationnaire sur le cadre de la machine-outil ou similaire, l'élément de support télescopique étant déployé ou rétracté lors du déplacement du capot de protection (60, 61).

27. Capot de protection (60, 61) ayant un dispositif de guidage selon l'une quelconque des revendications 1 à 26,
**caractérisé en ce que**
le capot de protection (60, 61) est formé à la manière d'un soufflet, les éléments de capot de protection (63) formant les cadres de support du soufflet.

28. Capot de protection (60, 61) ayant un dispositif de guidage selon l'une quelconque des revendications 1 à 26,
**caractérisé en ce que**
les éléments de capot de protection (63) débordent l'un sur l'autre de manière à être télescopiquement glissable l'un contre l'autre et ont une coupe transversale essentiellement en forme de U ou L au moins en sections.
